# EUROPEAN PATENT SPECIFICATION

(11) **EP 3 078 577 B1**
(45) Date of publication and mention of the grant of the patent: **19.12.2018**
(21) Application number: 15163026.6
(22) Date of filing: 09.04.2015
(51) Int. Cl.: B62D 25/20

(54) **A FLOOR SYSTEM, A VEHICLE, SUCH AS A SERVICE VEHICLE, COMPRISING SUCH A FLOOR SYSTEM**
BODENSYSTEM, FAHRZEUG, WIE BEISPIELSWEISE SERVICEFAHRZEUGE MIT SOLCH EINEM BODENSYSTEM
SYSTÈME DE PLANCHER, VÉHICULE, TEL QU'UN VÉHICULE DE SERVICE, COMPRENANT UN TEL SYSTÈME DE PLANCHER

(43) Date of publication of application: 12.10.2016
(73) Proprietor: Modul-System HH AB, 431 22 Mölndal (SE)
(72) Inventor: Carlsson, Anders, 422 50 Hisings Backa (SE)
(74) Representative: AWA Sweden AB

(56) References cited:
- DE-T2- 60 315 734
- JP-A- 2003 267 271

## Description

### Field of the Invention

The present invention relates to a floor system, adapted to be arranged on an inner floor of a cargo or a back space of a service vehicle. Furthermore, the present invention discloses a vehicle, such as a service vehicle, comprising such a floor system.

### Technical Background

It is common practise in the art of service vehicles to equip a cargo space or a back space of an automotive vehicle with for example cupboards, tool holders, shelves or other module units. This is usually made in a separate step after the vehicle has been manufactured, i.e. the equipping of the vehicle in question is made separately from the manufacturing. Before the vehicle is equipped with specialised equipment, usually the cargo space of the vehicle is provided with a floor, usually made of wood, composites or metals, but the floor might also be made of for example an artificial, plastic material. The floor is usually loosely placed on the floor or fastened to the floor of the cargo space by fasteners, for example, screws which are screwed into the underlying floor or connected to a fastener, for example a ring fastener which is permanently installed in the cargo or back space of the service vehicle. These floors may function as supports to work, stand and walk upon and may also be used as anchor plate for the module units.

The module unit or a module system, comprising several module units, is often not only attached to the underlying floor but is mostly also at least partly attached to the wall and the purpose is to counteract that the unit tips, for example, in a turn. During retardation of the vehicle the module system or the module unit may, if not securely attached and/or travel is reduced, move forward with a large force and which in a serious scenario may break through into the driver cabin and thereby even cause personal injuries. There may also be a risk for personal injury in the vehicle if the floor gets wet or if a person with wet or snow covered foot wear treads on the floor.

Usually a floor is individually made for a specific vehicle model, i.e. the floor is individually adapted to the length, the width and the wheel arch positions of the vehicle.

The ever increasing demands on flexible and quick installation of module systems are also important requirements. Usually the customer wants to change the working equipment, depending on what kind of work he/she has to do. So instead of replacing equipment one by one, it is desirable that a whole module unit or an entire module system could be changed, which saves time and the customer will always know that he/she has the right equipment with him. Hence, the module system has to be easy to connect and disconnect to the floor.

One example of such a floor system is disclosed in EP1894774, of the present applicant, which discloses a load securing system, for a cargo space in an automotive vehicle. At least two rails are fixable along the cargo space, wherein one of the rails is held by one or more fixing means connectable to respective ring fasteners of the service vehicle and the other rail is held as well by one or more fixing means connectable to respective ring fasteners, and the rails are connected to each other by a bridging element in a space between the rails.

DE 603 15 734 T2 discloses a floor for fastening wheelchairs, wherein two floor parts are connected via an intermediate rail.

However, there is still a need for a flexible solution which can be used for most kinds of back spaces and cargo spaces of a service vehicle and which is easy and quick to install and more resource efficient.

### Summary of the Invention

The object of the present invention is to provide a floor system that overcomes the above issues.

The invention is based on the insight that by having at least two floor sections, each with fixedly arranged securing rails and anti-slip elements a flexible floor system is provided. Furthermore, the inventors had the insight that the floor system may provide a vehicle floor more resistant to travel for persons and objects relative to the floor and may thus improve safety of work environment.

The invention according to a first aspect relates to a floor system adapted to be arranged on an inner floor of a cargo or a back space of a service vehicle, the floor system comprising
a first and a second prefabricated floor section, each one of the first and the second floor sections comprises
- a floor panel, the floor panel comprising a first edge and a second edge, wherein the first edge is arranged opposite the second edge, the first and the second floor sections are adapted to be arranged next to each other such that the second edge of the floor panel of the first floor section is placed facing and adjacent to, or in contact with the first edge of the floor panel of the second floor section,
- a first securing rail fixedly attached to a third edge of the floor panel, the third edge extending from the first edge to the second edge of the floor panel, and
wherein the floor panel further comprises a top surface for providing a floor surface in the cargo or back space, the top surface comprising a distributed plurality of anti-slip elements,
wherein said first securing rail comprises an undercut groove for securely connecting a module system or module units to said groove.

The plurality of anti-slip elements may comprise a number of elements protruding from the top surface of the floor panel, such that there is a height difference between the plurality of anti-slip elements and the top surface.

Furthermore, the term "distributed" may be understood as evenly placed over the top surface. Alternatively, the term "distributed" may be understood as being placed so that a pattern is achieved, e.g. a repeating pattern, an irregular pattern, a logotype, etc. The list is non-exhaustive. For example, the pattern may provide an assembly indication, such as a visual indication for aligning the first and the second prefabricated floor section relative to each other or to other objects. Alternatively, the term "distributed" may be understood such that a probability that a number of anti-slip elements on a first subset of the total area of the top surface is equal to a number of anti-slip elements on a second different subset is greater than 0.80, or greater than 0.90 or greater than 0.95.

The anti-slip elements may increase friction and provide grip on the top surface compared to a smooth floor panel without protrusions. This way the working environment may be improved by reducing the risk that a person may slip. Furthermore, there may be a reduction of travel for objects transported in the vehicle, which may also improve safety and possibly also order in the working environment. Furthermore, the height difference between the plurality of anti-slip elements and the top surface may separate moisture from the anti-slip elements, which may improve grip.

According to at least one exemplary embodiment the plurality of anti-slip elements may be separated from each other.

In the context of the invention the term "separated from each other" may be understood as the top surface having a smooth area between each anti-slip element and/or protruding member. The smooth area between each anti-slip element and/or protruding member may be coplanar with the top surface from which each anti-slip element and/or protruding member may protrude.

Furthermore, a top surface with anti-slip elements which are separated from each other may be easier to clean, brush off and/or rinse off, compared to a surface with ridges that extend from one edge to another, in particular compared to a surface with ridges that form e.g. a check pattern or honeycomb pattern, since separated anti-slip elements may reduce the number of pockets that be formed where dust, dirt, water, snow, etc. may gather.

The first and the second floor sections may be floor sections having the same predetermined dimensions. The supplier of the floor system may deliver these prefabricated, i.e. the floor panel with the securing rail is preassembled.

According to at least one exemplary embodiment the first and the second floor sections are adapted to be arranged adjacent to or in contact with each other in the longitudinal direction of the service vehicle. This way the first securing rails of the first and the second floor sections will extend in the longitudinal direction of the service vehicle.

The floor sections may be central sections. The central sections may be arranged along the centre line of the vehicle. Furthermore, the central sections may be arranged one after another along the centre line of the vehicle, such that a gap is formed between the respective floor section and the side wall of the vehicle, on either side. This may be advantageous as the vehicle may have a portion of its floor which is more planar along the centre of the vehicle, compared to either portion of its floor along its side walls. The respective gaps on either side of a floor section may advantageously accommodate wheel arches, door pillars, entry steps, etc. and the need for bespoke adaptations of the floor sections may be reduced or even eliminated.

Depending on the design of the floor section it can be ensured that the floor system is correctly installed in the service vehicle. The first and the second floor sections prefabricated. Since they are prefabricated they can be stacked and stored and quickly be delivered to a customer when needed. They can in a next step be quickly installed in the service vehicle, without being dependent on the surrounding, i.e. the outer contour of the inner floor of the cargo or back space of the service vehicle. Other advantages of having several floor sections instead of one large is that if one of the several floor sections is damaged, it can easily be individually replaced by a new one.

The system is not limited to have only a first and a second floor section. There may be more, for example, three or four or more. The amount of floor sections is dependent on the size of the floor sections and of the dimensions of the cargo or the back space of the service vehicle.

According to at least one exemplary embodiment the first floor section and/or the second floor section has an outer width which is not larger than that the first floor section and/or the floor section fits between two wheel housings which are arranged on either side of the service vehicle.

According to at least one exemplary embodiment the first floor section and/or the second floor section may have a rectangular shape.

According to at least one exemplary embodiment the floor panel may have a rectangular shape.

According to at least one exemplary embodiment the first and the second floor section has an outer width which is 1000 mm or 1200 mm. Most service vehicles have a width around 1200 mm inside the cargo or back space of the service vehicle between the wheel houses, which are protruding into the cargo or back space. However, smaller service vehicles have a width which is around 1000 mm between the wheel houses.

The outer width is defined as the length of the floor section, between two outer edges of the floor section which are perpendicular to the first and the second edges of the floor panel.

According to at least one exemplary embodiment the first floor section and/or the second floor section has a length between the first edge and the second edge, which is equal or smaller than the smallest dimension of a EUR-pallet.

According to at least one exemplary embodiment the first floor section has an outer width which is equal or smaller than the larger dimension of a EUR-pallet. A EUR-pallet may also be called Euro-pallet or EPAL-pallet and is the standard European pallet as specified by the European Pallet Association (EPAL). The EUR-pallet has at the time of writing a dimension of 1200x800 mm. The dimensions are not limited to be according to standard European pallets as specified by the European Pallet Association (EPAL). They may for example have dimensions according to pallets of other standards, for example American standards. According to at least one exemplary embodiment the first floor section has an outer width which is equal or smaller than the larger dimension of a standard American pallet type The standard American pallet type is of 40 by 48 inches (1,016 mm × 1,219 mm).

According to at least one exemplary embodiment the first floor section and/or the second floor section has a length between the first edge and the second edge which is equal or smaller than 1000 mm+/- 10mm or more preferably 800mm +100mm/-50mm. It has been realized by the inventor that the length of approximately 800mm, if all floor sections have the same length, will fit most cargo or back spaces today such that most of the cargo or back space is covered by floor sections in the longitudinal direction of the service vehicle. If there are minor sections of the inner floor which is not covered by the floor sections, for example at the end of the service vehicle, i.e. where the back door of the service vehicle usually is arranged an end floor piece may be arranged in that position. This might be the case, if the longitudinal length of the back space is slightly larger than the floor sections which shall be arranged there on.

The length between the first edge and the second edge may be the same for all floor sections or they may differ.

According to at least one exemplary embodiment the first floor section and the second floor sections has essentially the same outer width. This accomplishes that when the first and the second floor sections are arranged adjacent each other the first securing rails of the first and the second floor sections are aligned with each other.

The floor panel may be formed by a plastic material for example by injection molding, or it may be a sandwiched material or by another process such as extrusion or pressing any other suitable material, the lists are non-exhaustive. Preferably, the floor panel may have an outer surface which is hard-wearing and which will be facing the inside of the service vehicle.

According to at least one exemplary embodiment of the present invention each floor panel may be formed from one material. Having the floor panels formed from one material may be advantageous since a floor panel may be made in one step. Furthermore, having the floor panels formed from one material may be advantageous since a floor panel may be formed in one tool. The floor panel may be produced in essentially one manufacturing step. This is often more cost efficient than having multiple manufacturing steps and/or tools for producing a floor panel. It may further help when a floor panel is recycled at the end of the product life of the floor panel.

According to at least one exemplary embodiment of the present invention the plurality of anti-slip elements may be formed from one material with the floor panel. The plurality of anti-slip elements may be made in one piece and/or one production step with the floor panel. Furthermore, the first and the second floor section may have the same distribution of the plurality of anti-slip elements. Having one distribution and/or pattern of the plurality of anti-slip elements on the first and the second floor section may reduce the number of tools needed for production.

In some vehicles, in particular in vehicles with a low ceiling there is also a demand to reduce the volume that is taken up by the floor system, which is why the inventors have realized that there is an incentive to reduce thickness. There may also be a need to maintain or improve torsional rigidity.

According to at least one exemplary embodiment the floor panel may be formed without enclosed cavities. Furthermore, the floor panel may further comprises a bottom surface for facing an inner floor of the cargo or back space, the bottom surface may comprise stiffening ridges that mechanically connect at least two edges of the floor panel. The stiffening ridges may form a grid pattern covering the bottom surface of the floor panel. Alternatively the stiffening ridges may form a honeycomb pattern covering the bottom surface of the floor panel. Stiffening ridges may provide an improved torsional rigidity compared to a smooth floor panel, and may allow the floor panel to be formed thinner than a floor panel comprising two parallel planar surfaces that are interconnected with members perpendicular to the surfaces, such that cavities are formed between the two parallel planar surfaces, for example double floored panels. Depending on the production method the stiffening ridges may be less complex to produce compared to production of a floor panel with two parallel planar surfaces that are interconnected with members perpendicular to the surfaces, since the inner structures and cavities may require further steps or more complex tools. Furthermore it may be more resource efficient to have one essentially planar surface and stiffening ridges compared to having a floor panel with two parallel planar surfaces that are interconnected with members perpendicular to the surfaces

The first securing rail of each floor sections is preferably made of metal. It may for example be an aluminium extruded profile. The securing rail is fixedly attached to the floor panel by for example a tongue/groove connection, which is fixedly secured to each other by screwing the two parts together. However, the securing rail can be fixedly attached to the floor panel in any suitable way. The securing rails and the floor panel may have substantially the same thickness. This way the top (which is adapted to face the inside of the cargo or back space) and the underside (which will be facing the inner floor of the cargo or back space) of each securing rails and the top surface and the bottom surface of the floor panel may be at the same respective level, i.e. in a same respective top or bottom plane. The thickness of the floor panel may limit the material it is made of and/or the production method for producing the floor panel, for example thicker floor panels may require larger tools. Furthermore, thicker panels may be less resource efficient. The thickness of the floor panel may be less than 50 mm, or advantageously less than 40 mm, or more advantageously less than 35 mm.

According to the invention the first securing rail comprises an undercut groove. The undercut groove may have a cross-section which is T-shaped. That is, the groove in the securing rail may have a cross-section as an upside down shaped T. The module system or module units may be securely connected to the undercut groove. The undercut groove may advantageously comprise a substantially smooth groove wall which groove has a cross-section similar to an upside down shaped hollow T along the longitudinal extension of the securing rail. A smooth groove wall may provide a seamless adjustment of a fixation for the module units. Furthermore, a smooth groove wall may provide improved pressure distribution compared to for example a serrated groove, which smooth groove wall may allow a higher fixation torque. This way the module system or the module units can be safely arranged to the floor without making any damage, for example holes, in the underlying floor, i.e. the inner floor of cargo or back space. However, the first securing rail is not limited to have an undercut groove. The module system or the module units may be connected to the securing rail in any other suitable way, for example screwing into the securing rail.

According to at least one exemplary embodiment the floor system further comprises a floor portion, which is smaller than the first floor section and/or the second floor section and the floor portion comprises a first outer edge which follows a contour of the first securing rail of the first and/or the second floor section and which is adapted to be placed adjacent to or in contact with the first securing rail of the first and/or the second floor section during use.

By having a floor system comprising a first and a second floor section and a separate floor portion a large bespoke floor can easily be built up inside a cargo or back space of a service vehicle by combining the prefabrication of the floor sections and a customization of the floor portion or floor portions.

These floor sections are then arranged on the inner floor of the cargo or backspace of the vehicle together with one or more floor portions. The floor portion/portions may be adapted to the outer contour of the inner floor of the cargo or back space or the environment inside the cargo or back space by removing material from the floor portion. This can be done when installing the floor portion, or before i.e. they may be prefabricated. Alternatively, they may be both prefabricated and adapted. That is, they may first be prefabricated and then further adapted. Alternatively, several smaller floor portions may be arranged together as a puzzle until the whole inner floor or at least a major part of it is covered by the floor system.

The floor portion may be a side portion. The side portion may be adapted to be arranged on the side of the central sections, i.e. the floor sections. The floor portion may fill up the whole space or a part of it between one of the floor sections or both floor sections and one inner side wall of the service vehicle. Furthermore, the floor portion may be arranged in a gap between the first floor section and/or the second floor section and the side wall of the vehicle. The floor portion may be made of the same material as the floor panel of the floor sections. It may however differ. The floor portion and the floor panel of the first and/or second floor section are arranged on opposite sides of the securing rail.

According to at least one exemplary embodiment each one of the first and the second floor sections further comprises a second securing rail fixedly attached to a fourth edge of the floor panel, the fourth edge extending from the first edge to the second edge of the floor panel opposite the third edge. By having a second securing rail fixedly attached to the floor panel on the opposite side of the first securing rail, further fixation points for the module systems or module units are provided within the service vehicle when the floor system have been installed in the service vehicle. The second securing rail may have the same features as defined above for the first securing rail.

According to at least one exemplary embodiment the securing rail has a longitudinal extension which extends from the first edge to the second edge of the floor panel. With other words the first securing rail has the same length as the third edge of the floor panel. The same may apply to the second securing rail, i.e. it may have the same length as the fourth edge of the floor panel.

By having a securing rail which has the same length as the outer edge it is fixedly arranged to, it is ensured that fixation points are provided for the module system or the module units from one end of the floor system to the other end in the longitudinal direction of the floor system.

According to at least one exemplary embodiment the floor portion comprises a second outer edge which is adaptable to follow a part of the contour of the inner floor of the cargo or the back space in the vehicle by removing material from the floor portion. This enables that the floor portion can be adapted to the inner dimensions of the service vehicle and fill out the space between one of the floor sections or both floor sections and an inner wall of the cargo or back space.

According to at least one exemplary embodiment the floor portion is a first floor portion, and the floor system further comprises at least one second floor portion, which is smaller than the first and/or the second floor section and the second floor portion discloses a first outer edge which follows a contour of the first securing rail of the first and/or the second floor section and which is adapted to be placed adjacent to or in contact with the first securing rail of the first and/or the second floor section. By having more than one floor portion, an area which have not been covered by the floor sections, can be covered by several small identical or non identical floor portions. Further, there are usually at least two areas in the service vehicle on one side of the service vehicle, for example on the driver side which the floor sections do not cover, and it is usually in front and behind a wheel housing. By having more than one floor portion several areas may be covered and protected.

According to at least one exemplary embodiment the floor portion is a first floor portion and the floor system further comprises at least one second floor portion, which is smaller than the first and/or the second floor section and the second floor portion discloses a first outer edge which follows the contour of the second securing rail of the first and/or the second floor section and which is adapted to be placed adjacent to or in contact with the second securing rail of the first and/or the second floor section. By having more than one floor portion a second area, for example on the other side of the vehicle, i.e. on the other side of the floor sections can be covered by a floor portion. For example, the first floor portion can be arranged in front of the wheel housing on the driver side and a second floor portion can be arranged in front of the wheel housing, however on the other side, i.e. on the passenger side of the service vehicle.

According to at least one exemplary embodiment the at least one second floor portion comprises the same dimensions as the first floor portion. By having the floor portions identical several smaller floor portions may be arranged in an area to be covered. The floor portions may the fitted into that area as a puzzle. For example, several square shaped or rectangular shaped or any other suitable shaped floor portions may be fitted into that area. Further, one dimension of a floor portion may also fit to different areas, for example one may fit on the driver side and the other one may fit on the passenger side.

According to at least one exemplary embodiment the at least one second floor portion comprises the same dimensions as the first floor portion, however mirror inverted.

According to at least one exemplary embodiment the at least one second floor portion has a different shape than the first floor portion.

According to at least one exemplary embodiment the first and the second floor section have the same dimensions.

According to at least one exemplary embodiment the first and the second floor section have different dimensions between the first and the second edge of the floor panel.

According to at least one exemplary embodiment an end of the first and/or the second securing rail of the first floor section is adapted to face and be arranged adjacent to or in contact with an end of a respective first and/or second securing rail of the second floor section. With other words, when the floor system is arranged on the inner floor the end of the first securing rail, which is at the second edge of the floor panel of the first floor section, is facing and arranged adjacent to or in contact with an end of the first securing rail of the second floor section, which end is at the first edge of the floor panel of the second floor section. The same applies for the second securing rail. This to accomplish that a rectilinear securing track is formed. That is, the first securing rails are arranged in a substantially straight line one after the other. The same may apply for the second securing rails.

According to at least one exemplary embodiment the first securing rail comprises at each end mutually matching positioning members for connecting the first securing rail of the first floor section with the first securing rail of the second floor section. This accomplish a correct position of the first floor section relative the second floor section and it is ensured that a rectilinear securing track is formed.

According to a second aspect of the invention a vehicle, such as a service vehicle, comprising a floor system as described above is accomplished.

According to a third aspect of the invention it is accomplished a method of installing a floor system to an inner floor of a cargo or a back space of a service vehicle, the method comprising the steps:
- providing at least a first and a second prefabricated floor section, each comprising a floor panel and at least one securing rail fixedly attached to one edge of the floor panel,
- placing or instructing to place the first and second prefabrication floor sections on the inner floor
- optionally providing at least one floor portion or instructing to use at least one floor portion,
- optionally placing or instructing to place the at least one floor portion such that a first outer edge of the floor portion is adjacent to or in contact with the at least one securing rail of the first and/or second floor section,

The term "providing" is to be understood as follows: a supplier of the floor system sending or giving the installer the prefabricated floor sections alone or together with the floor parts.

The term "instructing" is to be understood as follows: a supplier of the floor system instructing the installer of the prefabricated floor sections to provide for the floor portions himself.

The term "placing" is to be understood as the installer of the prefabricated floor sections is placing the at least one floor portion and the first and second prefabricated floor sections on the inner floor.

The term "instructing to place" is to be understood as the supplier of the floor system instructing the installer of the prefabricated floor sections to place the at least one floor portion and the first and second prefabrication floor sections on the inner floor.

According to at least one exemplary embodiment the method further comprising the step:
- instructing to remove material from the floor portion from at least a second outer edge.

The term "instructing" is to be understood as follows: a supplier of the floor system instructs the installer of the prefabricated floor to remove material from the floor portion.

According to at least one exemplary embodiment wherein the step placing or instructing to place the first and second prefabrication floor sections on the inner floor comprising using an adhesive between the at least one securing rail and the inner floor. The floor system is preferably attached to the vehicle body by gluing the securing rail to the underlying floor of the cargo or the back space.

The structural features defined in the third aspect may be modified and used in accordance with any one of the embodiment of the first aspect.

According to a fourth aspect of the invention it is accomplished a method of installing a floor system to an inner floor of a cargo or a back space of a service vehicle, wherein the floor system comprises a first floor section and a second floor section, each of the first and the second floor section comprises a floor panel having at least a first edge and a second edge and a third edge, wherein the first edge is opposite the second edge and the third edge is extending from the first to the second edge of the floor panel, and a first securing rail fixedly attached to the third edge of the floor panel;
the floor system optionally comprising at least one floor portion, which is smaller than the first and/or the second floor section, and the floor portion discloses a first outer edge which follows the contour of the first securing rail of the first and/or the second floor section and the first outer edge of the floor portion is intended to be placed adjacent to or in contact with the first securing rail of the first and/or the second floor section during use,
the method comprising the following steps:
- arranging the first and the second floor sections next to each other on the inner floor such that the second edge of the floor panel of the first floor section is placed facing and adjacent to or in contact with the first edge of the floor panel of the second floor section in the longitudinal direction of the service vehicle such that the first securing rails of the first and the second floor section are extending in the longitudinal direction of the service vehicle,
- optionally adapting the at least one floor portion, if necessary, so that it fits on the inner floor of the cargo or the back space in the service vehicle
- optionally arranging the at least one floor portion adjacent to the first securing rail of the first and/or the second floor section such that the first outer edge of the floor portion is placed adjacent to or in contact with the securing rail.

Generally, all terms used in the claims are to be interpreted according to their ordinary meaning in the technical field, unless explicitly defined otherwise herein. All references to "a/an/the [element, device, component, means, step, etc]" are to be interpreted openly as referring to at least one instance of the element, device, component, means, step, etc., unless explicitly stated otherwise.

Other objectives, features and advantages of the present invention will appear from the following detailed disclosure, as well as from the drawings.

### Brief Description of the Drawings

The above, as well as additional objects, features and advantages of the present invention, will be better understood through the following illustrative and non-limiting detailed description of exemplary embodiments of the present invention, with reference to the appended drawings, where the same reference numerals will be used for similar elements, wherein:
Fig. 1 discloses an open-up perspective view of a service vehicle from comprising a floor system according to an embodiment of the invention;
Fig. 1a discloses the cross-section A-A in Fig. 1;
Fig. 2 discloses a top view of another embodiment of the floor system, outside of a service vehicle;
Fig. 3 discloses a floor section according to an embodiment of the invention in perspective from above;
Fig. 3a discloses the cross-section C-C in Fig. 3;
Fig. 3b discloses a partial enlarged view of Fig. 3;
Fig. 4 discloses the floor section from Fig. 3 in perspective from below;
Fig. 4a discloses a partial enlarged view of Fig 4; and
Fig. 5 discloses a perspective view of a number of floor sections according to an embodiment of the invention, stacked on a pallet.

All the figures are highly schematic, not necessarily to scale, and they show only parts which are necessary in order to elucidate the invention, other parts being omitted or merely suggested.

### Detailed Description of Exemplary Embodiments

An embodiment of the invention will be described in more detail in the following with reference to the accompanying drawings. The invention may, however, be embodied in many different forms and should not be construed as limited to the embodiments set forth herein; rather, these embodiments are provided for thoroughness and completeness. Like reference character refer to like elements throughout the description. It may also be noted that, for the sake of clarity, the dimensions of certain components illustrated in the drawings may differ from the corresponding dimensions in real-life implementations of the invention, for instance, and are not considered as limiting. The exemplary embodiment is mainly described with reference to a vehicle with a back space or cargo space, whereby the figures may be considered schematic in terms of proportions as vehicles may vary in size and configuration of back space or cargo space depending on model.

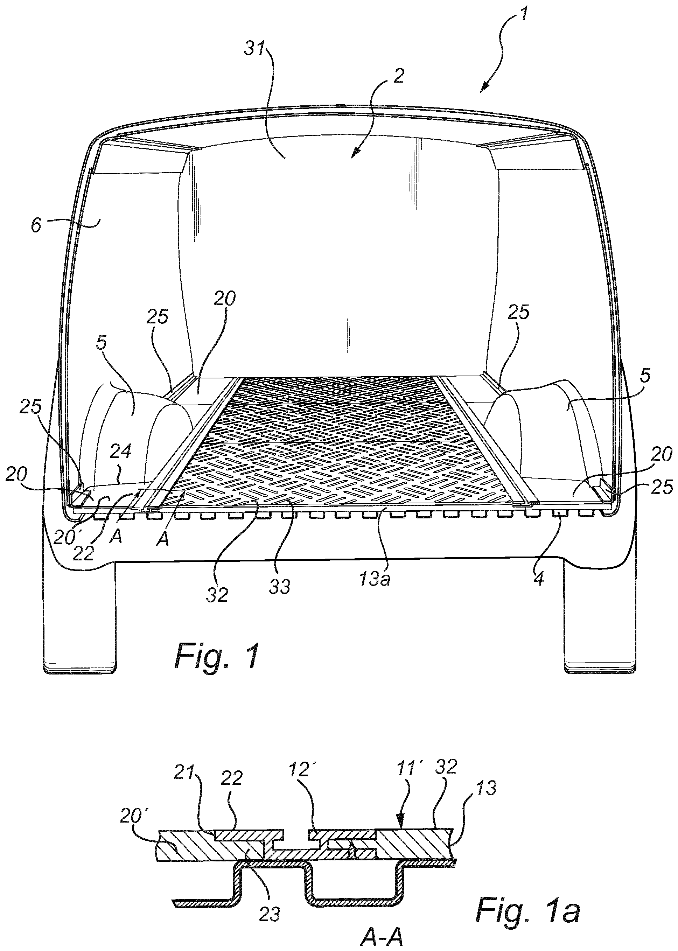

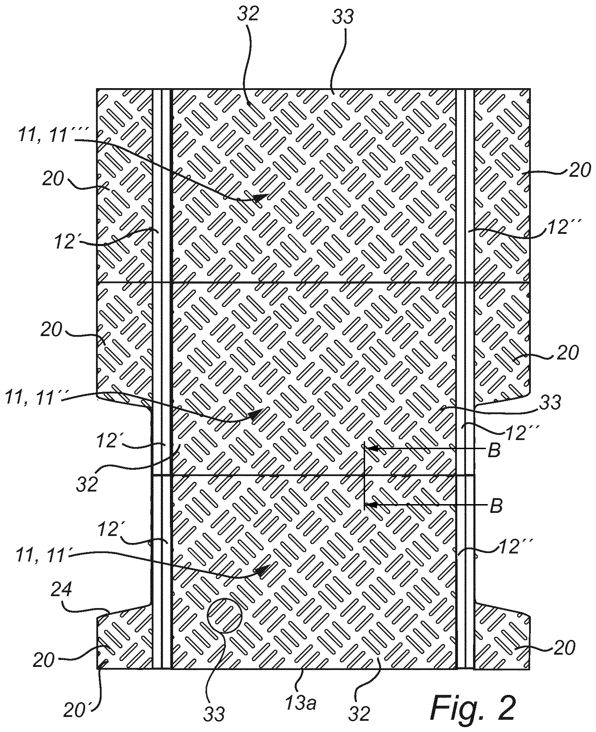

Fig. 1 shows a cargo or a back space 2 in a service vehicle 1 with a floor system 10 arranged on the inner floor 4 of the cargo or back space 2. Module units (not shown) such as a drawer unit containing for example drawers or shelves, can be placed and fixated on the installed inner floor system 10. The floor system 10, also shown in Fig. 2, and which is described together with Fig. 1 comprises of several floor sections 11, i.e. a first floor section 11', a second floor section 11" and a third floor section 11"', each comprising a first securing rail 12' and a second securing rail 12". The floor sections 11 are arranged on the inner floor 4 and in contact with each other. One end of the first securing rail 12' of the first floor section 11' is facing and arranged in contact with an end of the first securing rail 12'of the second floor section 11". The other end of the first securing rail 12' of the second floor section 11" is facing and arranged in contact with an end of the first securing rail 12' of the third floor section 11'''. The same applies for the second securing rails 12" of the floor sections 11. Alternatively they may be arranged adjacent to each other and not in contact, i.e. at a small distance from each other.

The floor system 10 further comprises several smaller floor portions 20 on both sides of the floor sections 11. The floor portions may work as levelling sections. The module units (not shown) are placed on the floor system 10 and they are being fixated to the securing rails 12', 12". The securing rails 12', 12"of the floor sections 11 are fastened to the inner floor 4 of the cargo or back space 2 and they will take up the forces of the module units during driving and during a crash. The securing rails 12', 12" are fastened to the inner floor 4 by adhesives. The adhesive may for example be an adhesive tape (not shown) prefixed to the securing rails 12', 12" or an adhesive which is being applied to the underside of the securing rails 12', 12" when mounting the floor system 10 to the inner floor 4 of the cargo or back space 2.

With reference to Figs. 1, 2 and 3 each floor panel 13 has a top surface 32 for facing the interior of the back space or cargo space of a service vehicle 1 when the floor system 10 is installed. The top surface 32 of the floor panel 13 further shows a distributed plurality of anti-slip elements 33 forming part of the top surface 32 of the floor panel 13. These provide increased friction of the surface 32. In the exemplary embodiments illustrated in Figs. 1, 2 and 3 the distributed plurality of anti-slip elements 33 form a repeated and evenly distributed pattern of anti-slip elements 33 that are each arranged perpendicular to adjacent anti-slip element 33, as seen from a top perspective, i.e. a perspective perpendicular to the top surface 32. Each anti-slip element 33 protrudes from the top surface 32 and is separated from the adjacent anti-slip elements 33, in that there is a gap between each anti-slip element 33 where there is no protrusion from the top surface 32. In these illustrated embodiments each anti-slip element 33 comprises three anti-slip members in the form of parallel ridges that protrude from the top surface 32 and that are separated from each other so that there is a gap between each anti-slip member where there is no protrusion from the top surface 32.

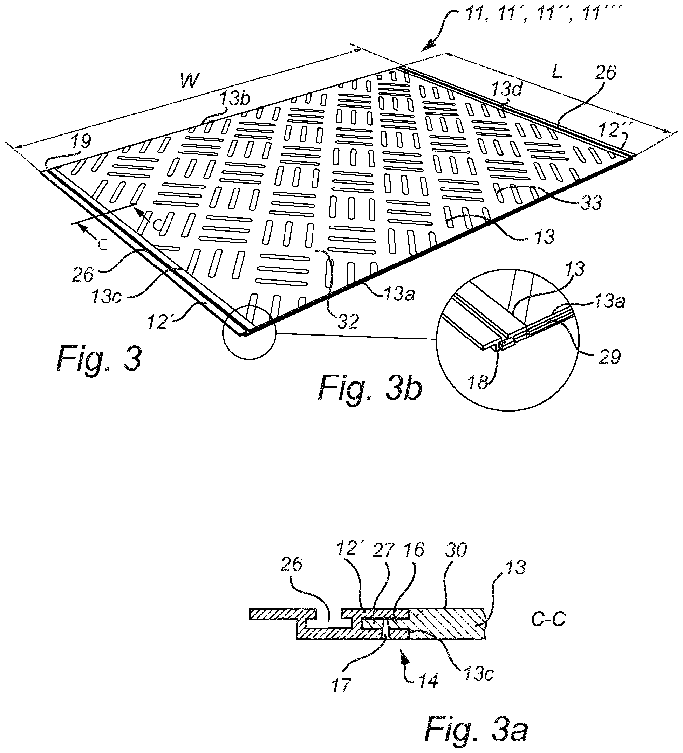

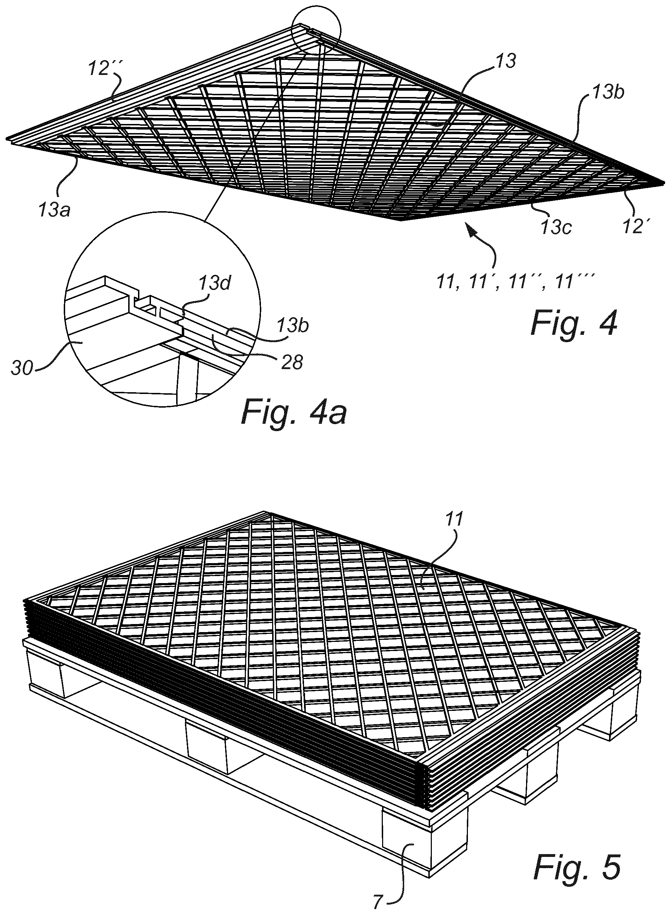

Fig. 3 and Fig. 4 show one of the floor sections 11 in Fig. 1 and Fig. 2. Fig. 3 is showing the floor section 11 from above and with a first edge 13a shown in the front and Fig. 4 is showing the floor section 11 from below with the second edge 13b shown in the front. The floor section 11 shown is exemplified as the first floor section 11', however the second floor section 11" and the third floor section 11''' are identical and will hence not be described further. However, the different floor sections 11 may vary in dimensions in the longitudinal direction of the service vehicle. The floor section 11 comprises of a floor panel 13. The floor panel 13 is rectangular. The floor panel 13 further comprises a first edge 13a and a second edge 13b, wherein the first edge 13a is opposite the second edge 13b. The floor panel also comprises a third edge 13c and a fourth edge 13d oppositely arranged from each other and perpendicular to the first and the second edges 13a, 13b. That is, the third and the fourth edge 13c, 13d are each extending from the first edge 13a to the second edge 3b.

A first securing rail 12' is fixedly arranged to the third edge 13c and a second securing rail 12" is fixedly arranged to the fourth edge 13d by a tongue/groove connection 14 as shown in Fig. 3a. The securing rails 12', 12" are made of metal and they comprises each an undercut groove 26, in order to fasten interiors such as model units thereto. The undercut groove 26 is essentially T-shaped. The undercut groove 26 is arranged on the side of the securing rail, which will be facing the inside of the cargo or back space of the service vehicle. Each securing rails 12', 12" also comprises a groove 27 along one side, i.e. on the side which be fixedly arranged to the floor portion 13. The third edge 13c and the fourth edge 13d of the floor panel 13 each comprises a mutually matching tongue 16 protruding from respective the third edge 13c and fourth edge 13d. The tongue 16 is arranged in the groove 27 of the securing rail 12'. The two parts are further fixed arranged to each other by screw joints 17 (only shown in Fig. 3a) along the longitudinal direction of the securing rail 12'. The securing rails 12', 12" are not limited to be connected to the floor panel 13 by using a tongue/groove connection 14 and screw joints 17. They may be connected any other suitable way. The side of each securing rails 12', 12" which are facing the inside of the cargo or back space is arranged at the same level, i.e. on the same plane as the top surface of the floor panel 13. The securing rails 12', 12" and the floor panel 13 have substantially the same thickness. This way the top of each securing rails 12', 12" and the top of the floor plate 13 (which will be facing the inside of the cargo or back space 2) are at the same level, i.e. on the same plane and the underside of each securing rails 12', 12" and the underside of the floor plate 13 (which will be facing the inner floor 4 of the cargo or back space 2) are at the same level, i.e. on the same plane. The thickness of the floor panel 13 is dependent on the material it is made of. The securing rails 12', 12" has a length which is substantially the same as the distance between the first edge 13a and the second edge 13b of the floor panel 13.

The floor sections are prefabricated and they have a size which is equal or smaller than a standard American pallet or a EUR-pallet. The EUR-pallet has a dimension which is 1200x800 mm, while the standard American pallet type of 40 by 48 inches (1,016 mm × 1,219 mm). Fig. 5 shows several floor sections 11 arranged on a EUR-pallet 7. Referring to Fig. 3 and Fig. 4 the floor section 11 has a width, which is approximately as large as the larger dimension of the EUR-pallet, i.e. 1200mm. The outer width W is defined as the length of the floor section, between two outer edges of the floor section 11 which are perpendicular to the first and the second edges 13a, 13b of the floor panel 13.

The floor section 11 has a length L between the first edge 13a and the second edge 13b of the floor panel 13 which is approximately as large as the smaller dimension of the EUR-pallet, i.e. 800mm. However, the floor sections are not limited to these dimensions. The securing rails 12', 12" has on one end a positioning member 18 (See Fig. 3b) arranged and on the opposite end a mutually matching opening 19, so that during use when the first floor section 11' and the second floor section 11" are arranged adjacent to each other the positioning members 18 fits into the mutually matching opening 19. This opening 19 is exemplified as being a part of the undercut groove 26 in the securing rails 12', 12" and the positioning member 18 is inserted in the undercut groove 26 on the opposite side of the securing rail 12', 12". This accomplish a correct position of the first floor section 11' relative the second floor section 11 " and a correct position of the second floor section 11" relative the third floor section 11''' so that it is ensured that a rectilinear securing track is formed.

The first edge 13a of the floor panel 13 comprises a tongue 29 protruding from the first edge 13a and extending along the first edge 13a (see Fig. 3 and Fig. 3a). The second edge 13b comprises a mutually matching groove 28 (see Fig 4 and Fig. 4a).

During use when the first and second floor sections 11', 11" are arranged next to each other, which is shown in Fig. 1 and in Fig. 2 and especially in Fig. 2a, the tongue 29 of the first edge 13a of the floor panel 13of the second floor section 11' is inserted into the groove 28 of the second edge 13b of the floor panel 13 of the first floor section 11' when the first floor section 11' is arranged adjacent the second floor section 11". The groove and the mutually matching tongue will be connected. An additional glue line can be applied to the top of the connection (not shown). The connection between two floor sections is not limited to the above described design. It may be made any suitable way. Alternatively, they need not be connected to each other at all, they may only be arranged adjacent or in contact with each other.

The floor panel 13 may be made of wood or plastic or any other suitable material. Here it is exemplified as an injection molded plastic floor panel.

Fig. 1 and Fig. 2 further shows that on both sides of the floor sections 11, several floor portions 20 are arranged. Only one will be described, in this example floor portion 20', however it may be noted that each illustrated floor portion 20 is made and arranged in a similar way, with one difference being that the floor portions 20 illustrated in Fig. 2 are provided with anti-slip elements repeating the pattern of the floor panels 13, while the floor portions 20, 20' illustrated in Fig. 1 are provided without anti-slip elements. The floor portion 20' is smaller than the floor sections 11 and the floor portion 20'comprises a first outer edge 21, which is also shown in Fig. 1a, which follows the contour of the first securing rail 12' of the first floor section 11'. The floor portion 20' and the floor panel 13 of the first floor section 11' are arranged on opposite sides of the first rail 12' of the first floor section 11'. As seen in Fig. 1a the securing rail 12' comprises a protruding member 22 which protrudes along the extension of the securing rail 12'. The floor portion 20' comprises a similar protruding member 23 which protrudes from the first outer edge 21 of the floor portion 20'. The protruding member 22 of the securing rail 12' is so designed that the top of the protruding member will be on the same level, i.e. on the same plane as the top of the floor portion 20' which is facing the inside of the service vehicle and it will be overlapping the protruding member 23 of the floor portion 20' such that when the floor portion 20' is arranged on the inner floor 4 of the service vehicle 1 the floor portion 20'will be hold in place by the protruding member 22 of the securing rail 12'. This "holding in place"- design can however be made differently. Alternatively the floor portion 20' can be loosely arranged on the inner floor 4. In Fig. 1 is also fixing rails 25 arranged to the inner wall 6 of the service vehicle 1 in order to hold the floor portions 20, 20' in place. These fixing rails 25 are also optional. The floor portion 20' has been adapted to the outer contour of the inner floor 4 of the backspace 2 of the service vehicle 1. For example, a second side 24 has been adapted to be arranged next to the wheel house 5 of the service vehicle 1. The floor portions 20, 20' may be cut out from a larger piece of material or provided as smaller pieces and delivered prefabricated or the installer may cut the floor portions himself. The floor portions may be further adapted to the interior of the back space 2 by removing material from the floor portions 20, 20'. The removing of material may be done by either cutting or sawing the floor portions into the right size. The floor portions 20, 20' are made from the same material as the floor panel 13 and have the same thickness. The floor portions 20, 20'is however not limited to have the same material, it may differ.

When installing the floor system 10 on the inner floor 4 of the cargo or the back space 2 of the service vehicle 1 the installer which shall install the floor system 10 is provided with the prefabricated floor sections 11 from the supplier. The prefabricated floor sections 11 may be stacked on top of each other and be delivered on a pallet to the installer. Fig. 5 shows the floor sections 11 stacked on a EUR-pallet 7. The installer is also provided with at least one floor portion 20, 20' or he/she is instructed by the supplier to use at least one floor portion 20, which he may provide himself.

The installer then places the floor sections 11, next to each other in the longitudinal direction of the service vehicle so that the securing rails 12', 12" of all floor sections are extending in the longitudinal direction of the service vehicle 1 (see Fig. 1) and connects the floor sections together by inserting the tongues 29 with respective grooves 28 and inserting the position members 18 in their respective holes 19, so that the securing rails 12', 12" of the first, second and third floor sections 11', 11", 11''' are arranged in one line in the longitudinal direction of the service vehicle . The first securing rail 12' of the first floor section 11' comprises an end, which is arranged at the second edge 13b of the floor panel 13 of the first floor section 11'. This end of the first securing rail 12' of the first floor section 11' is facing and arranged in contact with an end of the first securing rail 12' of the second floor section 11". This end of the first securing rail 12' of the second floor section 11" is arranged at the first edge 13a of the floor panel 13 of the second floor section 11". The other end of the first securing rail 12'of the second floor section 11 ", which end is arranged at the second edge 13b of the floor panel 13 of the second floor section 11" is facing and arranged in contact with an end of the first securing rail 12' of the third floor section 11'''. This end of the first securing rail 12' of the third floor section 11''' is arranged at the first edge 13a of the floor panel 13 of the third floor section 11'''. The same applies for the second securing rails 12" of the floor sections 11.

The floor sections 11 may be arranged in this order (see Fig. 1): First the second floor section 11" is arranged on the inner floor 4 with its first edge 13a arranged approximately in front of the wheel house 5 (see its position in Fig. 1) such that another floor section, in this case the first floor section 11' can be arranged between the wheel housings 5. In a second step the first floor section 11' is arranged on the inner floor 4 and to the second floor section 11". In a third step the third floor section 11' is arranged to the inner floor 4 and to the second floor section 11 ". Alternatively, the third floor section 11''' may be arranged prior to the first floor section 11'. The securing rails 12', 12" may at the same time be secured to the inner floor 4 by using an adhesive. For example the underside 30 of the securing rails 12', 12" (see Fig. 4a) may be provided with an adhesive tape. Alternatively, adhesive may be applied to the underside of the securing rail 12', 12" or to the inner floor 4 when arranging the floor sections 11 to the inner floor 4.

If there are parts of the inner floor 4 which have not been covered by the floor sections 11, for example if the third floor section 11''' is not extending all the way to the inner wall 31, which is placed behind the driver cabin (not shown) or if there is a space between the first floor section 11' and the back door of the service vehicle (not shown) end floor pieces (not shown) may be arranged in these areas. These end floor pieces may have a tongue or groove which is mutually matching to the tongue/groove connection on the floor sections 11 so that they can be attached thereto. However, other suitable attachments are also possible.

In the next step the floor portions 20, 20' are arranged to the inner floor 4 such that the first outer edge 21 of each floor portion 20, 20' is adjacent to or in contact with the at least one of the securing rail 12', 12" of the first, second or third floor section 11', 11", 11". If the floor portions 20', 20' are too large the installer can adapt the other edges, for example a second edge 24 of the floor portions to the surrounding by removing material and/or a third and/or a fourth edge. The protruding members 23 of the floor portions 20, 20' shown in Fig. 7 may be pushed beneath the protruding member 22 of the securing rail 12', 12".

Alternatively, the installer may place the floor portions 20, 20' first and adapt them to the surrounding before the floor sections 11 are arranged next to each other in the longitudinal direction of the service vehicle and next to the floor portions. The floor portions 20, 20' may then guide the floor sections 11 so that they are properly arranged in the service vehicle 1 such it is accomplished that the floor sections are arranged in the longitudinal direction of the service vehicle 1. The floor sections 11 may be further attached to the inner floor by applying adhesive or/and adhesive tape on the side of the floor sections 11 which will be facing the inner floor 4.

It should be understood that the present inventive concept has a further benefit. While it is practical to be able to ship floor sections 11 on a pallet 7 as illustrated in Fig. 5, it has been realized that one and the same supplier can additionally ship for example cupboards, tool holders, shelves or other module units on top of the floor sections 11 on the pallet 7. This is beneficial since a buyer can get the floor sections and the cupboards, shelves etc. in one and the same delivery, thus reducing the delivery costs. The practice today is, on the contrary, more expensive, since a buyer has to pay for the delivery of a service vehicle floor from one supplier and the delivery of the cupboards, shelves etc. from another supplier.

The invention has mainly been described above with reference to a few embodiments. However, as is readily appreciated by a person skilled in the art, other embodiments than the ones disclosed above, as well as combinations, are equally possible within the scope of the invention, as defined by the appended patent claims.

There may for example be variations to the distribution of the plurality of anti-slip elements and there may be variations to the form, dimension and number of the plurality of anti-slip elements and there may be variations to the form, dimension, number and relative arrangement of the anti-slip members of each respective anti-slip element. Furthermore, on a floor panel the anti-slip members may vary individually from each other in form, dimension, arrangement and the distance from the top surface it protrudes. Some production methods may call for uniform distribution while other methods allow irregular arrangement of the plurality of anti-slip elements. The anti-slip elements may form ridges and valleys on the floor panel, or ridges on a plateau, etc. Furthermore, there may be cause to cover the whole top surface of the floor panel with anti-slip elements or one or more spaces may be left free of anti-slip elements, e.g. to allow room for logotypes. It should be noted that the above-mentioned embodiments illustrate rather than limit the invention, and that those skilled in the art will be able to design many alternative embodiments without departing from the scope of the appended claims.

## Claims

1. A floor system (10) adapted to be arranged on an inner floor (4) of a cargo or a back space (2) of a service vehicle (1), said floor system (10) comprising
a first and a second prefabricated floor section (11', 11 "), each one of said first and said second floor sections (11', 11 ") comprises
- a floor panel (13), said floor panel (13) comprising a first edge (13a) and a second edge (13b), wherein said first edge (13a) is arranged opposite said second edge (13b), said first and said second floor sections (11', 11") are adapted to be arranged next to each other such that said second edge (13b) of said floor panel (13) of said first floor section (11') is placed facing and adjacent to, or in contact with said first edge (13a) of said floor panel (13) of said second floor section (11 "),
- a first securing rail (12') fixedly attached to a third edge (13c) of said floor panel (13), said third edge (13c) extending from said first edge (13a) to said second edge(13b) of said floor panel; and
wherein said floor panel (13) further comprises a top surface (32) for providing a floor surface in said cargo or back space (2), said top surface (32) comprising a distributed plurality of anti-slip elements (33),
wherein said first securing rail comprises an undercut groove (26) for securely connecting a module system or module units to said groove (26).

2. A floor system (10) according to claim 1, wherein each one of said first and said second floor sections (11', 11 ") further comprises a second securing rail (12") fixedly attached to a fourth edge (13d) of said floor panel (13), said fourth edge (13d) extending from said first edge (13a) to said second edge (13b) of said floor panel (13) opposite said third edge (13c).

3. A floor system (10) according to claim 1 or claim 2, wherein said securing rail (12', 12") has a longitudinal extension which extends from said first edge (13a) to said second edge (13b) of said floor panel (13).

4. A floor system (10) according to any one of said preceding claims, further comprising a floor portion (20, 20'), which is smaller than said first floor section (11') and/or said second floor section (11 ") and said floor portion (20) comprises a first outer edge (21) which follows a contour of said first securing rail (12') of said first and/or said second floor section (11', 11 ") and which is adapted to be placed adjacent to or in contact with said first securing rail (12') of said first and/or said second floor section (11', 11 ") during use.

5. A floor system (10) according to claim 4, wherein said floor portion (20, 20') comprises a second outer edge (24) which is adaptable to follow a part of a contour of said inner floor (4) of said cargo or said back space (2) in said service vehicle (1) by removal of material from said floor portion (20, 20').

6. A floor system (10) according to any one of the claims 4-5, wherein said floor portion (20, 20') is a first floor portion, and said floor system (10) further comprises at least one second floor portion (20, 20'), which is smaller than said first and/or said second floor section (11', 11") and said second floor portion (20, 20') discloses a first outer edge (21) which follows said contour of said first securing rail (12') of said first and/or said second floor section (11', 11") and which is adapted to be placed adjacent to or in contact with said first securing rail (12') of said first and/or said second floor section (11', 11").

7. A floor system (10) according to any one of the claims 4-6 in combination with claim 2, wherein said floor portion (20, 20') is a first floor portion and said floor system further comprises at least one second floor portion (20, 20'), which is smaller than said first and/or said second floor section (11', 11 ") and said second floor portion(20, 20') discloses a first outer edge (21) which follows a contour of said second securing rail (12") of said first and/or said second floor section (11', 11") and which is adapted to be placed adjacent to or in contact with said second securing rail (12") of said first and/or said second floor section (11', 11 ").

8. A floor system (10) according to claim 6 or 7, wherein said at least one second floor portion (20, 20') has said same dimensions as said first floor portion (20, 20').

9. A floor system (10) according to any one of the claims 5-8, wherein said at least one second floor portion (20, 20') has a different shape than said first floor portion (20, 20').

10. A floor system (10) according to any one of the preceding claims, wherein said first and said second floor section (11', 11 ") have said same dimensions.

11. A floor system (10) according to any one of the preceding claims, wherein an end of said first and/or said second securing rail (12', 12") of said first floor section (11') is adapted to face and be arranged adjacent to or in contact with an end of a respective first and/or second securing rail (12', 12") of said second floor section (11 ").

12. A floor system (10) according to any one of the preceding claims, wherein said first securing rail (12') comprises at each end mutually matching positioning members (18, 19) for connecting said first securing rail (12') of said first floor section (11') with said first securing rail (12') of said second floor section (11 ").

13. A floor system (10) according to any one of the preceding claims, wherein said plurality of anti-slip elements (33) is formed from one material with said floor panel (13), and wherein said first and said second floor section (11', 11") have said same distribution of said plurality of anti-slip elements (33).

14. A floor system (10) according to any one of the preceding claims, wherein said plurality of anti-slip elements (33) are separated from each other.

15. A vehicle (1), such as a service vehicle (1), comprising a floor system (10) according to any one of claims 1- 14.

## Patentansprüche

1. Bodensystem (10), das ausgelegt ist, um auf einem Innenboden (4) eines Laderaums oder eines Fondraums (2) eines Servicefahrzeugs (1) angeordnet zu werden, wobei das Bodensystem (10) umfasst
einen ersten und einen zweiten vorgefertigten Bodenbereich (11', 11"), wobei der erste und der zweite Bodenbereich (11', 11") jeweils umfassen
- ein Bodenpaneel (13), wobei das Bodenpaneel (13) eine erste Kante (13a) und eine zweite Kante (13b) umfasst, wobei die erste Kante (13a) der zweiten Kante (13b) entgegengesetzt angeordnet ist, der erste und der zweite Bodenbereich (11', 11") ausgelegt sind, um derart nebeneinander angeordnet zu werden, dass die zweite Kante (13b) des Bodenpaneels (13) des ersten Bodenbereichs (11') platziert wird, um zu der ersten Kante (13a) des Bodenpaneels (13) des zweiten Bodenbereichs (11") zu weisen und dieser benachbart oder in Kontakt mit dieser zu sein,
- eine erste Sicherungsschiene (12'), die fest an eine dritte Kante (13c) des Bodenpaneels (13) angebracht ist, wobei die dritte Kante (13c) sich von der ersten Kante (13a) zu der zweiten Kante (13b) des Bodenpaneels erstreckt; und
wobei das Bodenpaneel (13) ferner eine Oberfläche (32) zum Bereitstellen einer Bodenfläche in dem Laderaum oder Fondraum (2) umfasst, wobei die Oberfläche (32) eine verteilte Vielzahl von rutschfesten Elementen (33) umfasst,
wobei die erste Sicherungsschiene eine hinterschnittene Aussparung (26) zum sicheren Verbinden eines Modulsystems oder von Moduleinheiten mit der Aussparung (26) umfasst.

2. Bodensystem (10) nach Anspruch 1, wobei ferner der erste und der zweite Bodenbereich (11', 11") jeweils eine zweite Sicherungsschiene (12") umfassen, die fest an eine vierte Kante (13d) des Bodenpaneels (13) angebracht ist, wobei die vierte Kante (13d) sich von der ersten Kante (13a) zu der zweiten Kante (13b) des Bodenpaneels (13), der dritten Kante (13c) entgegengesetzt, erstreckt.

3. Bodensystem (10) nach Anspruch 1 oder Anspruch 2, wobei die Sicherungsschiene (12', 12") eine längliche Verlängerung aufweist, die sich von der ersten Kante (13a) zu der zweiten Kante (13b) des Bodenpaneels (13) erstreckt.

4. Bodensystem (10) nach einem der vorhergehenden Ansprüche, ferner umfassend einen Bodenabschnitt (20, 20'), welcher kleiner als der erste Bodenbereich (11') und/oder der zweite Bodenbereich (11") ist, und wobei der Bodenabschnitt (20) eine erste Außenkante (21) umfasst, welche einem Umriss der ersten Sicherungsschiene (12') des ersten und/oder des zweiten Bodenbereichs (11', 11") folgt und welche ausgelegt ist, um der ersten Sicherungsschiene (12') des ersten und/oder des zweiten Bodenbereichs (11', 11") während der Verwendung benachbart oder in Kontakt mit dieser zu sein.

5. Bodensystem (10) nach Anspruch 4, wobei der Bodenabschnitt (20, 20') eine zweite Außenkante (24) umfasst, die auslegbar ist, um einem Teil eines Umrisses des Innenbodens (4) des Laderaums oder des Fondraums (2) in dem Servicefahrzeug (1) durch Entfernen von Material von dem Bodenabschnitt (20, 20') zu folgen.

6. Bodensystem (10) nach einem der Ansprüche 4-5, wobei der Bodenabschnitt (20, 20') ein erster Bodenabschnitt ist und das Bodensystem (10) ferner mindestens einen zweiten Bodenabschnitt (20, 20') umfasst, welcher kleiner als der erste und/oder der zweite Bodenbereich (11', 11") ist, und der zweite Bodenabschnitt (20, 20') eine erste Außenkante (21) offenlegt, welche dem Umriss der ersten Sicherungsschiene (12') des ersten und/oder des zweiten Bodenbereichs (11', 11") folgt und welche ausgelegt ist, um der ersten Sicherungsschiene (12') des ersten und/oder des zweiten Bodenbereichs (11', 11") benachbart oder in Kontakt mit dieser platziert zu werden.

7. Bodensystem (10) nach einem der Ansprüche 4-6 in Kombination mit Anspruch 2, wobei der Bodenabschnitt (20, 20') ein erster Bodenabschnitt ist und das Bodensystem ferner mindestens einen zweiten Bodenabschnitt (20, 20') umfasst, welcher kleiner als der erste und/oder der zweite Bodenbereich (11', 11") ist, und der zweite Bodenabschnitt (20, 20') eine erste Außenkante (21) offenlegt, welche einem Umriss der zweiten Sicherungsschiene (12") des ersten und/oder des zweiten Bodenbereichs (11', 11") folgt und welche ausgelegt ist, um der zweiten Sicherungsschiene (12") des ersten und/oder des zweiten Bodenbereichs (11', 11") benachbart oder in Kontakt mit dieser platziert zu werden.

8. Bodensystem (10) nach Anspruch 6 oder 7, wobei der mindestens eine zweite Bodenabschnitt (20, 20') die gleichen Abmessungen wie der erste Bodenabschnitt (20, 20') aufweist.

9. Bodensystem (10) nach einem der Ansprüche 5-8, wobei der mindestens eine zweite Bodenabschnitt (20, 20') eine von dem ersten Bodenabschnitt (20, 20') verschiedene Form aufweist.

10. Bodensystem (10) nach einem der vorhergehenden Ansprüche, wobei der erste und der zweite Bodenbereich (11', 11") die gleichen Abmessungen aufweisen.

11. Bodensystem (10) nach einem der vorhergehenden Ansprüche, wobei ein Ende der ersten und/oder der zweiten Sicherungsschiene (12', 12") des ersten Bodenbereichs (11') ausgelegt ist, um zu einem Ende einer jeweiligen ersten und/oder zweiten Sicherungsschiene (12', 12") des zweiten Bodenbereichs (11") zu weisen und diesem benachbart oder in Kontakt mit diesem angeordnet zu werden.

12. Bodensystem (10) nach einem der vorhergehenden Ansprüche, wobei die erste Sicherungsschiene (12') an jedem Ende zueinander passende Positionierungsglieder (18, 19) zum Verbinden der ersten Sicherungsschiene (12') des ersten Bodenbereichs (11') mit der ersten Sicherungsschiene (12') des zweiten Bodenbereichs (11") umfasst.

13. Bodensystem (10) nach einem der vorhergehenden Ansprüche, wobei die Vielzahl von rutschfesten Elementen (33) aus einem Material mit dem Bodenpaneel (13) ausgebildet wird, und wobei der erste und der zweite Bodenbereich (11', 11") die gleiche Verteilung der Vielzahl von rutschfesten Elementen (33) aufweisen.

14. Bodensystem (10) nach einem der vorhergehenden Ansprüche, wobei die Vielzahl von rutschfesten Elementen (33) voneinander getrennt sind.

15. Fahrzeug (1), wie etwa ein Servicefahrzeug (1), das ein Bodensystem (10) nach einem der Ansprüche 1 - 14 umfasst.

## Revendications

1. Système de plancher (10) apte à être disposé sur un plancher intérieur (4) d'un espace de chargement ou arrière (2) d'un véhicule de service (1), ledit système de plancher (10) comprenant
une première et une seconde section de plancher préfabriqué (11', 11"), chacune de ladite première et de ladite seconde section de plancher (11', 11") comprenant
- un panneau de plancher (13), ledit panneau de plancher (13) comprenant un premier bord (13a) et un deuxième bord (13b), ledit premier bord (13a) étant disposé à l'opposé dudit deuxième bord (13b), lesdites première et seconde sections de plancher (11', 11") étant aptes à être disposées à proximité les unes des autres de manière à ce que ledit deuxième bord (13b) dudit panneau de plancher (13) de ladite première section de plancher (11') soit placé face à face et adjacent à ou en contact avec ledit premier bord (13a) dudit panneau de plancher (13) de ladite seconde section de plancher (11"),
- un premier rail de blocage (12') attaché fixement à un troisième bord (13c) dudit panneau de plancher (13), ledit troisième bord (13c) s'étendant depuis ledit premier bord (13a) jusqu'audit deuxième bord (13b) dudit panneau de plancher ; et
ledit panneau de plancher (13) comprenant en outre une surface supérieure (32) pour créer une surface de plancher dans ledit espace de chargement ou arrière (2), ladite surface supérieure (32) comprenant une pluralité répartie d'éléments anti-glissement (33),
ledit premier rail de blocage comprenant une gorge contre-dépouillée (26) pour connecter fixement un système de module ou des unités de modules à ladite gorge (26).

2. Système de plancher (10) selon la revendication 1, dans lequel chacune de ladite première et de ladite seconde section de plancher (11', 11") comprend en outre un second de blocage (12") attaché fixement à un quatrième bord (13d) dudit panneau de plancher (13), ledit quatrième bord (13d) s'étendant depuis ledit premier bord (13a) jusqu'audit second bord (13b) dudit panneau de plancher (13) opposé audit troisième bord (13c).

3. Système de plancher (10) selon la revendication 1 ou la revendication 2, dans lequel ledit rail de blocage (12',12") a une extension longitudinale qui s'étend depuis ledit premier bord (13a) jusqu'audit second bord (13b) dudit panneau de plancher (13).

4. Système de plancher (10) selon l'une quelconque des revendications précédentes, comprenant en outre une section de plancher (20,20') qui est plus petite que ladite première section de plancher (11') et/ou ladite seconde section de plancher (11") et ladite section de plancher (20) comprenant un premier bord extérieur (21) qui suit un contour dudit rail de blocage (12') de ladite première et/ou de ladite seconde section de plancher (11', 11") et qui est apte à être placé adjacent à ou en contact avec ledit premier rail de blocage (12') de ladite première et/ou de ladite seconde section de plancher (11', 11") en cours d'utilisation.

5. Système de plancher (10) selon la revendication 4, dans lequel ladite section de plancher (20,20') comprend un second bord extérieur (24) qui est adaptable pour suivre une partie d'un contour dudit plancher intérieur (4) dudit espace de chargement ou arrière (2) dans ledit véhicule de service (1) par retrait de matériau de ladite section de plancher (20,20').

6. Système de plancher (10) selon l'une quelconque des revendications 4 à 5, dans lequel ladite section de plancher (20,20') est une première section de plancher, et ledit système de plancher (10) comprend en outre au moins une seconde section de plancher (20,20') qui est plus petite que ladite première et/ou ladite seconde section de plancher (11',11") et ladite seconde section de plancher (20,20') présente un premier bord extérieur (21) qui suit ledit contour dudit premier rail de blocage (12') de ladite première et/ou ladite seconde section de plancher (11',11") et qui est apte à être placé adjacent à ou en contact avec ledit premier rail de blocage (12') de ladite première et/ladite seconde section de plancher (11',11").

7. Système de plancher (10) selon l'une quelconque des revendications 4 à 6 en combinaison avec la revendication 2, dans lequel ladite section de plancher (20,20') est une première section de plancher, et ledit système de plancher comprend en outre au moins une seconde section de plancher (20,20') qui est plus petite que ladite première et/ou ladite seconde section de plancher (11',11") et ladite seconde section de plancher (20,20') présente un premier bord extérieur (21) qui suit un contour dudit second rail de blocage (12") de ladite première et/ou ladite seconde section de plancher (11',11") et qui est apte à être placé adjacent à ou en contact avec ledit second rail de blocage (12") de ladite première et/ou ladite seconde section de plancher (11', 11").

8. Système de plancher (10) selon la revendication 6 ou 7, dans lequel ladite au moins une seconde section de plancher (20,20') a lesdites mêmes dimensions que ladite première section de plancher (20,20').

9. Système de plancher (10) selon l'une quelconque des revendications 5 à 8, dans lequel ladite au moins une seconde section de plancher (20,20') a une forme différente de celle de ladite première section de plancher (20,20').

10. Système de plancher (10) selon l'une quelconque des revendications précédentes, dans lequel ladite première et/ou ladite seconde section de plancher (11', 11") ont lesdites mêmes dimensions.

11. Système de plancher (10) selon l'une quelconque des revendications précédentes, dans lequel une extrémité dudit premier et/ou dudit second rail de blocage (12', 12") de ladite première section de plancher (11') est apte à faire face et à être disposée adjacente à ou en contact avec une extrémité d'un premier et/ou second rail de blocage respectif (12,'12") de ladite seconde section de plancher (11").

12. Système de plancher (10) selon l'une quelconque des revendications précédentes, dans lequel ledit premier rail de blocage (12') comprend à chaque extrémité des éléments de positionnement coïncidant mutuellement (18,19) pour connecter ledit premier rail de blocage (12') de ladite première section de plancher (11') audit premier rail de blocage (12') de ladite seconde section de plancher (11").

13. Système de plancher (10) selon l'une quelconque des revendications précédentes, dans lequel ladite pluralité d'éléments anti-glissement (33) sont formés d'un seul matériau avec ledit panneau de plancher (13) et ladite première et/ou ladite seconde section de plancher (11', 11") ont la même répartition que ladite pluralité d'éléments anti-glissement (33).

14. Système de plancher (10) selon l'une quelconque des revendications précédentes, dans lequel ladite pluralité d'éléments anti-glissement (30) sont séparés les uns des autres.

15. Véhicule (1), tels que véhicule de service (1), comprenant un système de plancher (10) selon l'une quelconque des revendications 1 à 14.
